# EUROPEAN PATENT APPLICATION

(11) **EP 4 650 157 A1**
(43) Date of publication of application: **19.11.2025**
(21) Application number: 24305773.4
(22) Date of filing: 17.05.2024
(51) Int. Cl.: B29D 11/00

(54) **METHOD FOR MANUFACTURING AN OPHTHALMIC LENS INCLUDING A WAFER AND TWO THERMOSET MATERIAL PORTIONS**

(71) Applicant: Essilor International, 94220 Charenton-Le-Pont (FR)
(72) Inventor: SOAVE, Pascal, 21110 LONGECOURT-EN-PLAINE (FR)
(74) Representative: Plasseraud IP

(57) **Abstract**

A method for manufacturing an ophthalmic lens that includes a wafer (13) and two thermoset material portions comprises forming a sub-assembly that is comprised of one mould part (101), the wafer and a continuous glue string (30). The glue string connects a peripheral edge of the wafer to the mould part, thereby forming a first cavity (C1). Said first cavity is filled with monomer-containing liquid and sealed. The sub-assembly can then be used to form a complete lens mould (100). The method alleviates drawbacks of previous methods, in particular when the wafer spontaneously curls.

## Description

The invention relates to a method for manufacturing an ophthalmic lens that includes a wafer and two thermoset material portions. It also relates to a sub-assembly useful for manufacturing such ophthalmic lens.

### -- BACKGROUND OF THE INVENTION --

Manufacturing of thermoset ophthalmic lenses that include wafers is necessary for providing to the lenses additional functions which are produced by the wafers. For example, a wafer may be light-polarizing, but it may have any function, design and constitution. In particular, the wafer may implement a plurality of materials within a multilayered structure.

In a current method for manufacturing a wafer-including ophthalmic lens, the wafer is fitted into a groove provided in a gasket which peripherally seals a lens mould. But insertion of the wafer into the groove is delicate operation, requiring radial expansion of the gasket, thereby causing uncontrolled stresses in the gasket. Other issues relate to production of gaskets that do not exhibit initial deformation at the groove, possible defects in the positioning of the wafer into the groove, using of a clip for pressing the mould parts against the gasket but also causing gasket deformation, and this method being not compatible with using an adhering tape for sealing the mould of the gasket.

US 11,529,779 B2 discloses affixing the wafer to one of both mould parts that are used for casting the ophthalmic lens, while maintaining free space for connecting to each other casting sub-volumes that are located on respective sides of the wafer. The wafer is maintained using glue spots that fixedly secure the wafer to the mould surface of the mould part with a gap therebetween. When pouring a liquid-containing monomer suitable for thermosetting into a completed lens mould formed by both mould parts and peripheral mould sealing means, the liquid fills the sub-volumes internal to the mould on both sides of the wafer, thereby resulting after curing into the ophthalmic lens with the wafer embedded between two thermoset lens portions.

But the method of US 11,529,779 B2 has drawbacks due to the propensity of the wafer to curl. Indeed, the wafer curls most of time because of its very small thickness, internal stresses and initial bulging shape if preformed. This causes the wafers to vary in position between the dots that secure it to one of the mould parts, and the ophthalmic lenses that are finally obtained are not identical because of these wafer position variations. Quality issues also result from these variations, including microbubbles or casting defects due to some wafer parts being too close to the mould part between successive glue dots.

Starting from this situation, one object of the present invention consists in providing a new method that does not have the previous drawbacks.

Another object of the invention consists in manufacturing ophthalmic lenses with embedded wafers without significantly increasing the unit cost price and the overall production time.

Still another object of the invention is to provide such manufacturing method that is reliable in producing ophthalmic lenses which are identical and devoid of defects.

### -- SUMMARY OF THE INVENTION --

For meeting at least one of these objects or others, a first aspect of the present invention proposes a new method for manufacturing an ophthalmic lens that includes a wafer and two thermoset material portions, this method comprising the following steps:
/1/ providing two mould parts, comprising a first mould part that has a concave mould surface suitable for defining a front surface of the lens and a second mould part that has a convex mould surface suitable for defining a rear surface of the lens;
/2/ affixing the wafer onto one of the first and second mould parts, referred to as wafer-bearing mould part, so that the wafer is facing the concave or convex mould surface of this wafer-bearing mould part with a gap therebetween, using a continuous glue string close to a peripheral edge of the wafer thereby enclosing a first cavity between the wafer and the wafer-bearing mould part except an opening;
/3/ filling the first cavity through the opening with a first monomer-containing liquid amount, then sealing the opening;
/4/ assembling the first and second mould parts together with peripheral mould sealing means so as to form a lens mould that encloses a second cavity located on a side of the wafer opposite the filled first cavity;
/5/ filling the second cavity with a second monomer-containing liquid amount;
/6/ simultaneously curing the first and second monomer-containing liquid amounts contained within the lens mould; and
/7/ separating the first and second mould parts from each other and recovering the lens comprised of the wafer embedded between both thermoset material portions respectively resulting from the first and second monomer-containing liquid amounts.

Since both first and second monomer-containing liquid amounts are cured simultaneously for forming both thermoset material portions, the unit cost price of the lens and the production time are not significantly increased. Steps /4/ to /7/ may be implemented without much adaptation compared to known thermosetting processes. Furthermore, glue dispensers are available that can execute step /2/ in a rapid, very well controlled and unexpensive manner.

In addition, implementing a continuous glue string for affixing the wafer to one of the mould parts allows improved positioning of the wafer within the completed lens mould, thereby suppressing the defects caused by the variable positions of wafer parts between separated glue dots.

Preferably, a size of the wafer may be selected so that the peripheral edge of the wafer is surrounded by the peripheral mould sealing means during steps /5/ and /6/ with a gap intermediate between this peripheral edge of the wafer and the peripheral mould sealing means all around the wafer. This ensures that the peripheral mould sealing means do not push onto the peripheral edge of the wafer, thereby avoiding stresses and shape alterations for the wafer to occur during steps /5/ and 16/.

Possibly, the peripheral mould sealing means may comprise a gasket designed for accommodating respective peripheral edges of the first and second mould parts in recesses of this gasket. Alternatively, the peripheral mould sealing means may comprise a tape suitable for adhering to the respective peripheral edges of the first and second mould parts. Thus, the invention method is compatible with existing lens mould designs.

The wafer may be of any type and designed for providing any function to the ophthalmic lens. In particular, the wafer may be light-polarizing, or micro-structured with depressions and reliefs, or designed as an active wafer suitable for producing a variable lens parameter. Alternatively or in combination, the wafer may be adapted for producing at least one of the following functions: tinting function, mirror function and antireflecting function.

Step /2/ may comprise the following substeps:
/2-1/ arranging the glue string in viscous glue state on the wafer or on the wafer-bearing mould part;
/2-2/ moving the wafer and the wafer-bearing mould part closer to each other so as to obtain desired thickness for the first cavity while both the wafer and the wafer-bearing mould part are contacting the glue string; and
/2-3/ curing the glue string, preferably using UV-irradiation, thereby setting a size of the first cavity.

In first implementations of the invention method, the wafer-bearing mould part is the first mould part and the concave mould surface is spherical. Then, the glue string may be arranged on the wafer in substep /2-1/. In particular for allowing good control of the sub-assembly of the wafer with the wafer-bearing mould part, the wafer may advantageously be maintained fixedly on a support using suction therebetween at least during substeps /2-1/ to /2-3/, and the wafer is released from the support before step /4/ by suction suppression. Additionally, the support may be provided with a supporting surface that matches a shape of the wafer, in particular a bulged wafer shape. In such case, the wafer is maintained against this supporting surface at least during substeps /2-1/ to /2-3/, thereby improving the control of the wafer position in a further extent.

In second implementations of the invention method, the wafer-bearing mould part is the first mould part again but the concave mould surface is a progressive addition surface. Then, the glue string may be arranged in substep /2-1/ on a planar annular facet of the first mould part which surrounds the concave mould surface. Advantageously as before, the wafer may be maintained fixedly on a support using suction therebetween at least during substeps 12-21 and /2-3/, and the wafer is released from the support before step /4/ by suction suppression. Additionally, the support may be provided with a supporting surface that matches a shape of the wafer, in particular a bulged wafer shape, and the wafer is maintained against this supporting surface at least during substeps 12-2/ and /2-3/.

Generally for the invention, the concave mould surface may be spherical or progressive.

Also generally for the invention, the wafer may have a bulged shape, i.e. may be curved with two-dimensional non-zero curvatures. Preferably, it may be oriented in step 121 such that the wafer surface that is convex is facing the concave mould surface of the first mould part. Then, the wafer may have a radius of curvature which is advantageously greater than that of the concave mould surface.

In most preferred implementations of the invention method, one or several of the following additional features may be reproduced additionally:
- a thickness of the glue string may be selected so that a center thickness of the first cavity is between 0.5 mm and 1.2 mm;
- a thickness of the glue string from step 121 may be between 0.65 mm and 1.4 mm when measured perpendicular to the wafer;
- the first and second monomer-containing liquid amounts may have identical or different compositions, in particular compositions selected to achieve different respective refractive index values for the thermoset material portions that result separately from these first and second monomer-containing liquid amounts;
- the first monomer-containing liquid amount may be introduced into the first cavity in step /3/ using vacuum assistance; and
- the opening may be sealed at the end of step /3/ by supplementing the glue string with an additional glue portion in this opening.

A second aspect of the invention proposes a sub-assembly that comprises:
- a mould part, having a concave or convex mould surface suitable for defining a front surface of an ophthalmic lens or a rear surface of the lens, respectively;
- a wafer, affixed to the mould part and facing the mould surface with a gap therebetween; and
- a continuous solid glue string that secures rigidly the wafer to the mould part and extends close to a peripheral edge of the wafer, thereby enclosing a cavity between the wafer and the mould part except an opening.

Such sub-assembly may be used in a same way as the mould part devoid of wafer in a standard casting process. It may be used in a method according to the first invention aspect. More specifically, such sub-assembly results from steps /1/ and /2/. It forms a vessel capable of containing a liquid amount within its cavity.

When ready to be used for completing the lens casting, the sub-assembly may further comprise:
- a monomer-containing liquid amount that fills the cavity; and
- sealing means, arranged for sealing the opening.

Such sub-assembly is easy to handle without any risk of liquid leakage. It can be assembled with the other mould part for completing the lens casting, in particular by executing steps /4/ to /7/.

These and other features of the invention will be now described with reference to the appended figures, which relate to preferred but not-limiting embodiments of the invention.

### -- BRIEF DESCRIPTION OF THE DRAWINGS --

Figure 1 is a cross-sectional view of an ophthalmic lens manufactured using the invention method;
Figures 2a and 2b are respective cross-sectional views of moulds used for casting thermoset lenses;
Figures 3a to 3f illustrate successive steps of a first implementation of the invention method, suitable for single-vision ophthalmic lenses; and
Figures 4a to 4d illustrate successive steps of a second implementation of the invention method, suitable for progressive-addition ophthalmic lenses.

For clarity sake, element sizes which appear in these figures do not correspond to actual dimensions or dimension ratios. Also, same reference numbers which are indicated in different ones of these figures denote identical elements of elements with identical function.

### -- DETAILED DESCRIPTION OF THE INVENTION --

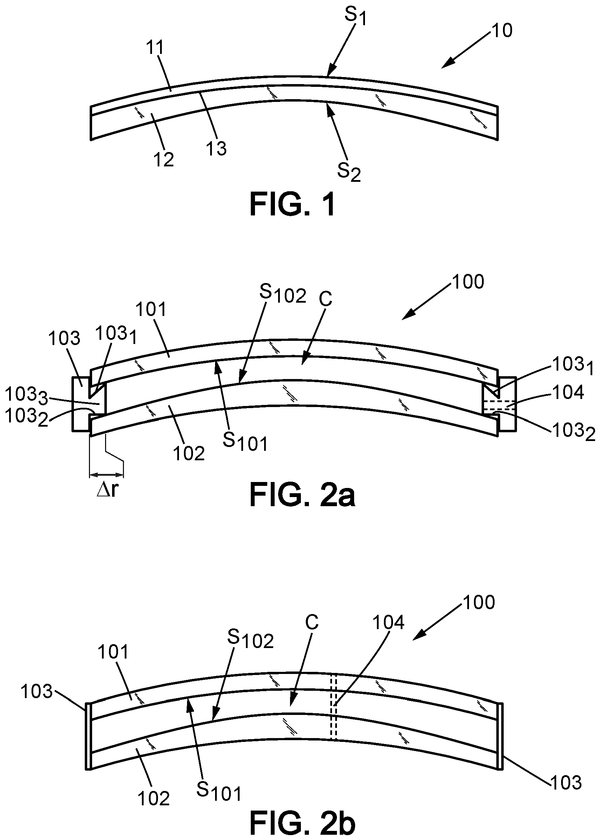

According to Figure 1, a wafer-embedding ophthalmic lens 10 to be manufactured includes a wafer 13 adhered to two thermoset lens portions located on either side of the wafer 13. Reference numbers 11 and 12 denote the lens portions. The lens 10 may be a so-called semi-finished lens where the final rear surface of the lens is to be machined in a later processing step. When resulting directly from the invention process, the front surface S₁ of the ophthalmic lens 10 is convex, possibly spherical or with a progressive addition profile, and the rear surface S₂ of the ophthalmic lens 10 is concave. Diameter of the ophthalmic lens 10 may be of between 70 mm (millimeter) and 80 mm, for example. When the front lens surface S₁ is spherical, diameter lengths measured along any direction perpendicular to an optical axis of the lens10 are all equal, for example of about 76 mm. When the front lens surface S₁ is of progressive addition type, a lens diameter length measured vertically with respect to a use position of the lens 10 on a wearer's face with his head oriented vertically is shorter than another lens diameter length measured horizontally. For example, the vertical lens diameter may be 72.76 mm and the horizontal lens diameter may be 76.39 mm.

The wafer 13 may be of any type, design and composition. In general, it has a multilayered structure and has been preformed beforehand so that it exhibits a bulged shape. In particular, the invention is especially convenient to embedding a light-polarising wafer 13 in a thermoset semi-finished ophthalmic lens 10.

According to Figure 2a, a mould assembly 100 for thermoset ophthalmic lenses is comprised of a first mould part 101, a second mould part 102 and peripheral mould sealing means 103. First mould part 101 is provided with a first mould surface S₁₀₁ that is intended to define the front lens surface S₁ during the thermosetting process, and second mould part 102 is provided with a second mould surface S₁₀₂ that is intended to define the rear lens surface S₂. The first mould surface S₁₀₁ may be spherical or progressive, according to the desired front lens surface S₁. The peripheral mould sealing means 103 have three functions: firstly setting the separating distance between first and second mould surfaces S₁₀₁ and S₁₀₂ according to a target value for the lens thickness, secondly peripherally sealing a cavity C between the first and second mould surfaces S₁₀₁ and S₁₀₂ so that a monomer-containing liquid can be introduced into this cavity C, and thirdly providing a filling aperture suitable for such liquid introduction.

First known embodiment of the peripheral mould sealing means 103 is shown in Figure 2a. The mould sealing means 103 are comprised of an annular gasket which is provided with re-entrant circular edge profiles 103₁ and 103₂ suitable for accommodating respective peripheral edges of the first and second mould parts 101 and 102 while setting a separating distance therebetween. A thickness Δr of a gasket rib 103s between both edge profiles 103₁ and 103₂ may be comprised between 2.5 mm and 5 mm. A filling aperture 104 is provided at a location in the annular shape of the gasket for connecting the internal cavity C of the lens mould 100 to outside. The filling aperture 104 is to be used in a known manner for introducing a monomer-containing liquid amount into the mould cavity C.

An alternative embodiment also known for the peripheral mould sealing means 103 is shown in Figure 2b. The peripheral mould sealing means 103 are now comprised of a tape which is wrapped on the respective peripheral edges of the first and second mould parts 101 and 102 and adheres thereto. Thus, the tape connects both mould parts 101 and 102 to each other and sets a desired separating distance between the mould surfaces S₁₀₁ and S₁₀₂. The tape length is selected to be little shorter than the common circumference length of both mould parts 101 and 102, so as to form a tape-free segment that forms the filling aperture 104.

The invention is compatible with using either of both peripheral mould sealing means of Figure 2a (gasket-based) and 2b (tape-based).

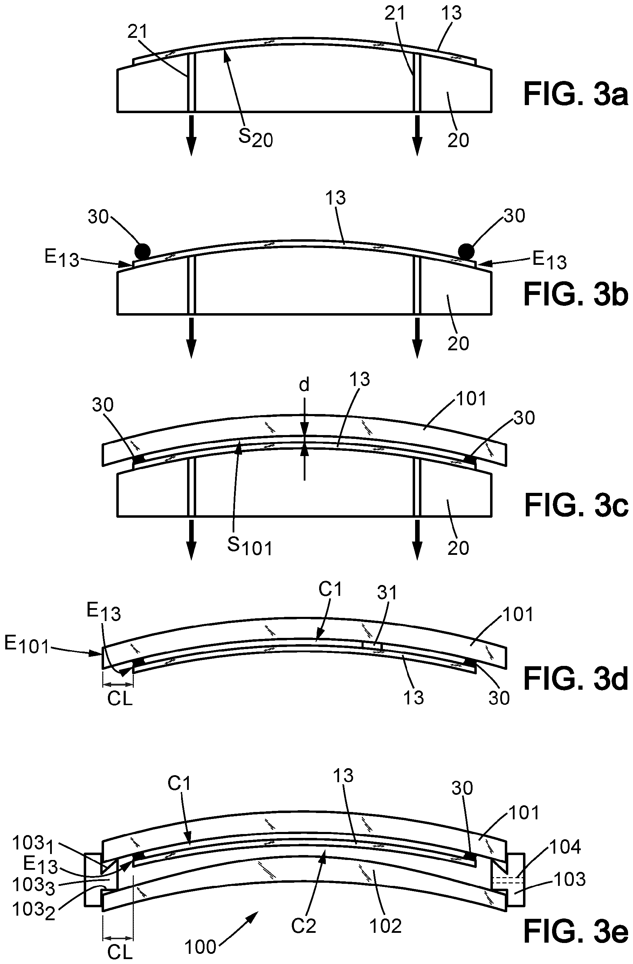

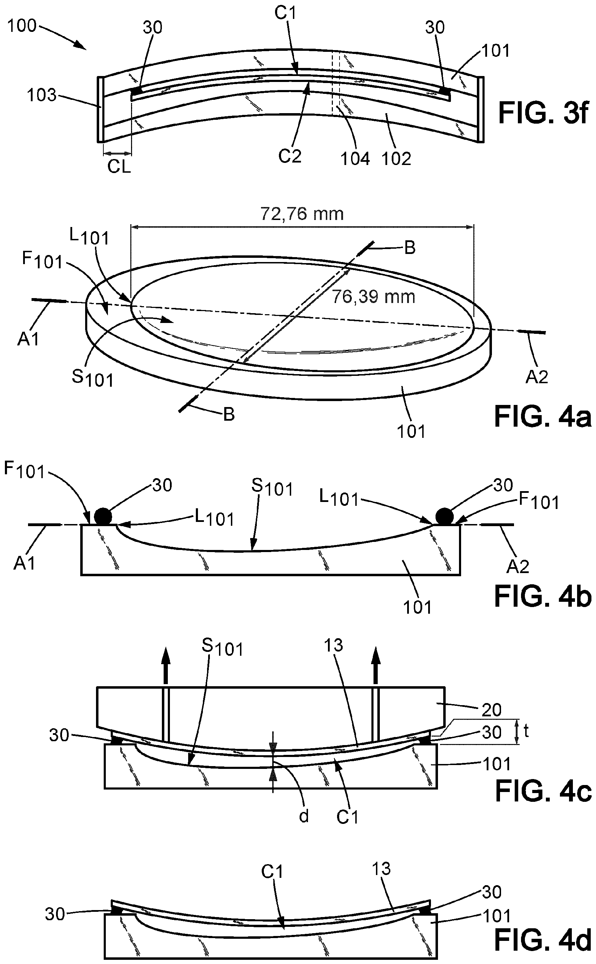

In the invention implementations described below, it is assumed that the wafer 13 is to be affixed to the first mould part 101. Put another way, the wafer-bearing mould part is the first one that defines the convex front lens surface S₁. First implementation relevant for casting an ophthalmic lens 10 that has a spherical front lens surface S₁ is illustrated by Figures 3a-3f. Second implementation illustrated by Figures 4a-4d is useful for casting an ophthalmic lens 10 that has a front lens surface S₁ of progressive addition type.

Referring to Figure 3a, a support 20 has a supporting surface S₂₀ that matches with the bulged shape of the wafer 13. The wafer 13 is maintained in position against the supporting surface S₂₀ using any appropriate releasable fastening means such as suction means connected to channels 21 that extend through the support 20. The suction means are symbolically shown as arrows in Figures 3a-3c. Suitable position-identification means such as a pin may also be used for setting an orientation of the wafer 13 on the supporting surface S₂₀ if necessary.

A continuous glue string 30 is deposited on the wafer 13 opposite the support 20 and close to the peripheral edge E₁₃ of the wafer 13, as shown in Figure 3b. Commercially available glue dispensers may be used for depositing the glue string 30 in a viscous and sticky glue state. The glue string 30 is thus arranged all along the circular peripheral edge E₁₃ of the wafer 13 except a small circumference segment which remains glue-free.

Then, the first mould part 101 is brought into contact with the glue string 30 opposite the wafer 13, and a separating distance d is adjusted and set between the wafer 13 and the mould surface S₁₀₁ by suitable positioning of the mould part 101 with respect to the support 20. Configuration of Figure 3c is thus obtained and maintained while the glue is cured. Such curing step preferably implements UV-irradiation for hardening the glue but thermal curing of the glue may be used alternatively. For example, the separating distance d may have been set in this way to 0.70 mm. Both the wafer 13 and the mould surface S₁₀₁ being almost spherical and parallel in this first embodiment, the glue dispenser is adjusted so that the glue string is about 0.70 mm thick.

Then suction is stopped and the mould part 101 assembled with the wafer 13 is recovered separately from the support 20. The first mould part 101 together with the cured glue string 30 and the wafer 13 constitute the sub-assembly mentioned in the general part of the present description and shown in Figure 3d. This sub-assembly forms a first cavity C1 between the wafer 13 and the mould part 101, surrounded by the glue string 30. Thanks to the glue string 30 extending continuously along the peripheral edge E₁₃ of the wafer 13, the sub-assembly constitutes a vessel with internal cavity C1 connected to outside by the small glue-free circumference segment. This glue-free segment forms another filling aperture denoted with reference number 31. A diameter value for the wafer 13 has been initially selected such that the wafer edge E₁₃ is inside the peripheral edge E₁₀₁ of the mould part 101, with a clearance distance CL selected with respect to the peripheral mould sealing means 103 as explained below.

As a next step, the cavity C1 is filled with a first monomer-containing liquid amount through the aperture 31. Vacuum assistance may be implemented for facilitating the filling with the liquid without trapping gas volume or bubbles. The aperture 31 is then sealed using any appropriate means. For example, an additional glue segment may be deposited in the aperture 31 and cured.

The sub-assembly of Figure 3d is used for forming the completed lens mould 100. Figure 3e illustrates using the gasket-based peripheral mould sealing means 103 of Figure 2a and Figure 3f illustrates using the tape-based peripheral mould sealing means 103 of Figure 2b. For the gasket case of Figure 3e, the clearance distance CL is large enough for the wafer edge E₁₃ to be away from the rib 103s of the gasket. Typically, the clearance distance CL is selected depending on the thickness Δr of the gasket rib 103₃ so that the wafer edge E₁₃ is distant from the gasket rib 103₃ by about 0.25 mm - 0.50 mm all along the wafer circumference in the present case of spherical front lens surface. So-completed lens mould 100 forms a second cavity C2 between the wafer 13 and the second mould part 102. For the tape case of Figure 3f, the clearance distance CL may be reduced if desired because of absence of any rib internal to the peripheral mould sealing means 103. For the tape-based assembly of Figure 3f, the clearance distance CL may be of between 0.25 mm and 0.50 mm.

At this stage in the manufacturing method, the cavity C2 is empty whereas the cavity C1 is filled with the first monomer-containing liquid amount. Both independent cavities C1 and C2 together with the wafer 13 replaces the initial mould cavity C as appearing in Figure 2a.

The cavity C2 is then filled with a second monomer-containing liquid amount through the aperture 104. Such filling can be performed in a usual way as known before the invention. The first and second monomer-containing liquids may be identical or different, for example depending on refractive index values desired on both sides of the wafer 13 in the final ophthalmic lens 10 to be obtained. The manufacturing method can then be completed in a usual way again by thermally processing the filled lens mould 100 so as to thermoset simultaneously the first and second monomer-containing liquid amounts. In the end of the manufacturing method, the lens mould 100 is disassembled and the ophthalmic lens 10 is recovered. It is comprised of the wafer 13 embedded between both thermoset lens portions 11 and 12. Lens portion 11 results from thermosetting of the first monomer-containing liquid amount in the first cavity C1, and lens portion 12 results from thermosetting of the second monomer-containing liquid amount in the second cavity C2. Adhesion of the wafer 13 to both lens portions 11 and 12 is ensured through appropriate material selection for the exposed layers of the wafer 13.

When the front lens surface S₁, defined by to the mould surface S₁₀₁, is of progressive addition type, an issue results from points in this surface that all have one and same sagittal value not forming a circle. This is due to the curvature of the front lens surface S₁ being higher in the lower lens part referring to the as-worn position of the ophthalmic lens 10. Therefore, when the mould surface S₁₀₁ is limited by intersection with a planar face portion, the mould surface S₁₀₁ exhibits a vertical diameter which is shorter than a horizontal diameter, adjectives vertical and horizontal referring again to the as-worn position of the ophthalmic lens 10. For example, the vertical diameter of the so-limited mould surface S₁₀₁ may equal 72.76 mm and its horizontal diameter may equal 76.39 mm, corresponding to the values provided beforehand for the lens 10 when of progressive addition type. The vertical diameter value varies as a function of the addition value of the ophthalmic lens 10. Because of this, the mould surface S₁₀₁ is surrounded with an annular planar facet F₁₀₁ in the mould part 101, with a common limit L₁₀₁ between the mould surface S₁₀₁ and the facet F₁₀₁. This limit L₁₀₁ is a deformed circle, as shown in the perspective view of the mould part 101 provided in Figure 4a. B-B is the direction of the so-called horizontal diameter, and A1-A2 that of the so-called vertical diameter with A1 directed downwards in the as-worn position of the ophthalmic lens 10.

The glue string 30 is deposited on the planar facet F₁₀₁ using a glue dispenser that may be similar as before. The dispensing track surrounds the limit L₁₀₁ and the glue string 30 has constant thickness t all along the limit L₁₀₁ in the sub-assembly comprised of the mould part 101, the wafer 13 and the glue string 30. This ensures that reduced deformation and stresses will be generated later on in the wafer 13. The dispensing track may be close to and parallel to the limit L₁₀₁ or with an in-plane separating distance between the dispensing track and the limit L₁₀₁ which varies continuously with the location around this latter. Possibly, if the wafer 13 is almost spherical, the glue string 30 may be almost circular, around the limit L₁₀₁ but at some increased distance from this latter in an angular sector containing A1-direction while closer to the limit L₁₀₁ elsewhere. The mould part 101 with the glue string 30 is shown in Figure 4b. The glue string 30 surrounds the mould surface S₁₀₁ except a small segment for forming the filling aperture 31 as before.

The wafer 13 is arranged on the support 20 as shown in Figure 3a with the suction means activated for fastening the wafer 13 to the supporting surface S₂₀. The support 20 and the first mould part 101 are brought closer to each other with the wafer 13 facing the mould surface S₁₀₁ until the wafer 13 contacts with the glue string 30. Configuration represented in Figure 4c is obtained in this way, with the first cavity C1 again enclosed between the mould surface S₁₀₁, the wafer 13 and the glue string 30. As an example, the thickness t of the glue string 30 measured perpendicular to the facet F₁₀₁ may equal 1.16 mm for obtaining a separating distance d of 0.70 mm at a center point of the cavity C1.

The manufacturing method is continued from this stage with the same steps as for the preceding case of spherical front lens surface. These following steps are in their execution order:
- curing of the glue string 30 for hardening it, preferably using UV-irradiation,
- removal of the support 20 by suction suppression and recovering the sub-assembly shown in Figure 4d,
- filling of the cavity C1 with the first monomer-containing liquid amount,
- sealing of the filling aperture 31,
- assembling of the mould part 101 with the mould part 102 and the peripheral mould sealing means 103 for forming the complete lens mould 100,
- filling of the cavity C2 with the second monomer-containing liquid amount,
- applying thermal treatment for simultaneously thermosetting the first and second monomer-containing liquid amounts, and
- disassembling the lens mould 100 and recovering the wafer-embedding ophthalmic lens 10.

As for the case of the spherical front lens surface S₁, the size of the wafer 13 is to be selected initially so that it does not contact the peripheral mould sealing means 103 as long as the lens mould 100 is assembled, for preventing wafer deformations and avoiding stresses within the wafer 13. For each one of the gasket-based assembly and tape-based assembly, the clearance distance CL in the progressive addition case may be such that the edge E₁₃ of the wafer 13 is at a distance of about 1 mm or more from the peripheral mould sealing means 103 in the cavity C.

Although the preceding description has been provided for implementations where the wafer is glued to the first mould part, i.e. that which defines the convex front lens surface, the Man skilled in the art will be capable of adapting the method to glue-affixing the wafer to the second mould part, i.e. that which defines the concave rear lens surface.

It is also reminded that the invention method can be used whatever the function of the wafer. In particular, the wafer is not limited to producing light-polarization, but it may be microstructured so as to form a microlens pattern or grating pattern. The wafer may also be designed to exhibit a varying optical parameter, for example an optical parameter to be controlled with suitable command signal.

## Claims

1. A method for manufacturing an ophthalmic lens (10) that includes a wafer (13) and two thermoset material portions (11, 12), said method comprising the following steps:
/1/ providing two mould parts, comprising a first mould part (101) that has a concave mould surface (S₁₀₁) suitable for defining a front surface (S₁) of the lens (10) and a second mould part (102) that has a convex mould surface (S₁₀₂) suitable for defining a rear surface (S₂) of the lens;
// affixing the wafer (13) onto one of the first and second mould parts (101, 102), referred to as wafer-bearing mould part, so that said wafer is facing the concave or convex mould surface of said wafer-bearing mould part with a gap between said wafer and said concave or convex mould surface, using a continuous glue string (30) close to a peripheral edge (E₁₃) of the wafer thereby enclosing a first cavity (C1) between said wafer and the wafer-bearing mould part except an opening (31);
/3/ filling the first cavity (C1) through the opening (31) with a first monomer-containing liquid amount, then sealing said opening;
/4/ assembling the first and second mould parts (101, 102) together with peripheral mould sealing means (103) so as to form a lens mould (100) that encloses a second cavity (C2) located on a side of the wafer (13) opposite the filled first cavity (C1);
/5/ filling the second cavity (C2) with a second monomer-containing liquid amount;
/6/ simultaneously curing the first and second monomer-containing liquid amounts contained within the lens mould (100); and
/7/ separating the first and second mould parts (101, 102) from each other and recovering the lens (10) comprised of the wafer (13) embedded between both thermoset material portions (11, 12) respectively resulting from the first and second monomer-containing liquid amounts.

2. The method of claim 1, wherein a size of the wafer (13) is selected so that the peripheral edge (E₁₃) of said wafer is surrounded by the peripheral mould sealing means (103) during steps /5/ and /6/ with a gap intermediate between said peripheral edge of the wafer and said peripheral mould sealing means all around the wafer.

3. The method of claim 1 or 2, wherein the peripheral mould sealing means (103) comprise a gasket designed for accommodating respective peripheral edges of the first and second mould parts (101, 102) in recesses of said gasket, or comprises a tape suitable for adhering to the respective peripheral edges of the first and second mould parts.

4. The method of one of the preceding claims, wherein the wafer (13) is light-polarizing, or is micro-structured with depressions and reliefs, or is designed as an active wafer suitable for producing a variable lens parameter, and/or the wafer is adapted for producing at least one of the following functions: tinting function, mirror function and antireflecting function.

5. The method of one of the preceding claims, wherein a thickness of the glue string (30) is selected so that a center thickness (d) of the first cavity (C1) is between 0.5 mm and 1.2 mm.

6. The method of one of the preceding claims, wherein a thickness (t) of the glue string (30) from step /2/ is between 0.65 mm and 1.4 mm when measured perpendicular to the wafer (13).

7. The method of one of the preceding claims, wherein step /2/ comprises the following substeps:
/2-1/ arranging the glue string (30) in viscous glue state on the wafer (13) or on the wafer-bearing mould part;
/2-2/ moving the wafer (13) and the wafer-bearing mould part closer to each other so as to obtain desired thickness for the first cavity (C1) while both the wafer and the wafer-bearing mould part are contacting the glue string (30); and
12-31 curing the glue string (30), preferably using UV-irradiation, thereby setting a size of the first cavity (C1).

8. The method of claim 7, wherein the wafer-bearing mould part is the first mould part (101) and the concave mould surface (S₁₀₁) is spherical, and wherein the glue string (30) is arranged on the wafer (13) in substep /2-1/.

9. The method of claim 8, wherein the wafer (13) is maintained fixedly on a support (20) using suction between said wafer and said support at least during substeps /2-1/ to /2-3/, and the wafer is released from the support before step /4/ by suction suppression.

10. The method of claim 9, wherein the support (20) is provided with a supporting surface (S₂₀) that matches a shape of the wafer (13), and the wafer is maintained against said supporting surface at least during substeps /2-1/ to 12-3/.

11. The method of claim 7, wherein the wafer-bearing mould part is the first mould part (101) and the concave mould surface (S₁₀₁) is a progressive addition surface, and wherein the glue string (30) is arranged in substep /2-1/ on a planar annular facet (F₁₀₁) of said first mould part which surrounds said concave mould surface (S₁₀₁).

12. The method of claim 11, wherein the wafer (13) is maintained fixedly on a support (20) using suction between said wafer and said support at least during substeps /2-2/ and /2-3/, and the wafer is released from the support before step /4/ by suction suppression.

13. The method of claim 12, wherein the support (20) is provided with a supporting surface (S₂₀) that matches a shape of the wafer (13), and said wafer is maintained against said supporting surface at least during substeps /2-2/ and /2-3/.

14. The method of one of the preceding claims, wherein the first and second monomer-containing liquid amounts have different compositions, in particular compositions selected to achieve different respective refractive index values for the thermoset material portions (11, 12) that result separately from the first and second monomer-containing liquid amounts.

15. The method of one of the preceding claims, wherein the first monomer-containing liquid amount is introduced into the first cavity (C1) in step /3/ using vacuum assistance.

16. The method of one of the preceding claims, wherein the opening (31) is sealed at the end of step /3/ by supplementing the glue string (30) with an additional glue portion in the opening.

17. A sub-assembly that comprises:
- a mould part (101), having a concave or convex mould surface (S₁₀₁) suitable for defining a front surface (S₁) of an ophthalmic lens (10) or a rear surface (S₂) of the lens, respectively;
- a wafer (13), affixed to the mould part (101) and facing the mould surface (S₁₀₁) with a gap therebetween; and
- a continuous solid glue string (30) that secures rigidly the wafer (13) to the mould part (101) and extends close to a peripheral edge (E₁₃) of the wafer, thereby enclosing a cavity (C1) between said wafer and the mould part except an opening (31).

18. The subassembly of claim 17, further comprising:
- a monomer-containing liquid amount that fills the cavity (C1); and
- sealing means, arranged for sealing the opening (31).
